# EUROPEAN PATENT SPECIFICATION

(11) **EP 3 152 676 B1**
(45) Date of publication and mention of the grant of the patent: **24.07.2019**
(21) Application number: 15730610.1
(22) Date of filing: 05.06.2015
(51) Int. Cl.: H04L 29/08

(54) **CONVERTING PRESENTATION METADATA TO A BROWSER-RENDERABLE FORMAT DURING COMPILATION**
UMWANDLUNG VON PRÄSENTATIONSMETADATEN IN EIN IN EINEM BROWSER DARSTELLBARES FORMAT WÄHREND DER KOMPILATION
CONVERSION DE MÉTADONNÉES DE PRÉSENTATION EN UN FORMAT RESTITUABLE SUR NAVIGATEUR PENDANT UNE COMPILATION

(30) Priority: 09.06.2014 US 201462009667 P; 14.10.2014 US 201414513762
(43) Date of publication of application: 12.04.2017
(73) Proprietor: Microsoft Technology Licensing, LLC, Redmond, WA 98052-6399 (US)
(72) Inventor: GHOSH, Dipanjan, Redmond, WA 98052-6399 (US); DONGRE, Manali, Redmond, WA 98052-6399 (US)
(74) Representative: Grünecker Patent- und Rechtsanwälte PartG mbB
(86) International application number: PCT/US2015/034324
(87) International publication number: WO 2015/191370

(56) References cited:
- US-A1- 2006 129 632
- US-A1- 2014 019 834
- US-A1- 2014 033 010
- US-B1- 8 201 082
- US-B2- 7 386 786

## Description

### BACKGROUND

Computer systems are currently in wide use. Many computer systems have forms or other display mechanisms by which information in the computer system is presented to a user.

As one example, some computer systems include business systems. Business systems can include, for instance, enterprise resource planning (ERP) systems, customer relations management (CRM) systems, line-of-business (LOB) systems, among others. These types of systems can have hundreds or thousands of different forms that are presented to users in different contexts. Each form can have many different controls. Some forms also have associated logic, data, state information, and other behavioral information. Prior art document US2014/019834 A1 shows a server-client architecture wherein a static representation of a form and dynamic content are sent separately to the client.

Business systems are but one example of such systems. For instance, electronic mail or other messaging systems, as well as electronic storefronts, document management systems and a large variety of other computer systems have forms or similar mechanisms that present data to users as well.

In order to develop a form, a developer often models the form in a development environment. The modeled form is then compiled into a serializable format (such as XML) and saved to a data store.

During runtime, the form may be used in a server-based system (such as a server-based business system). When a user requests the form in a browser, a request is sent to the server with a name of the form that needs to be opened. The server then uses the XML representation to create and initialize the form and its controls, and to execute any runtime code that is associated with the form. After all the code has been executed, the server generates the form according to a format in which it can be sent to a client application, and sends the form to the client. In some systems, the server generates a representation of the form using descriptors of the full form. For instance, the server can generate a JavaScript Object Notation (JSON) representation of the form. This is interpreted by code in the browser to generate the structure and markup language format which is used to render the form in the browser. Thus, the server generates the entire representation of the form and transmits it to the client for rendering in the browser.

The discussion above is merely provided for general background information and is not intended to be used as an aid in determining the scope of the claimed subject matter.

### SUMMARY

A request for a form is received on a client device. A static representation of the form, that includes structural information defining an overall structure of the form, as well as attribute information, is received on the client device, and a browser on the client device generates a renderable, markup language representation of the form based upon the static representation. Behavioral and state information is received from a server and is used to augment the renderable version of the form. The browser then renders the augmented, renderable version of the form.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

Figure 1 is a block diagram of one example of a development environment.
Figure 2 is a flow diagram illustrating one example of the operation of the environment shown in Figure 1 in developing a form.
Figure 2A shows one example of a user interface display generated in the development environment.
Figure 3 is a block diagram illustrating one example of a server-based runtime environment.
Figures 4A and 4B (collectively referred to as Figure 4) show one example of the operation of the server-based runtime environment shown in Figure 3, in rendering a form requested by a user.
Figure 5 shows one example of a user interface display that can be generated in the environment shown in Figure 3.
Figure 6 shows one example of the environment shown in Figure 3, disposed in a cloud computing environment.
Figure 7-9 show various examples of mobile devices.
Figure 10 is a block diagram of one example of a computing environment.

### DETAILED DESCRIPTION

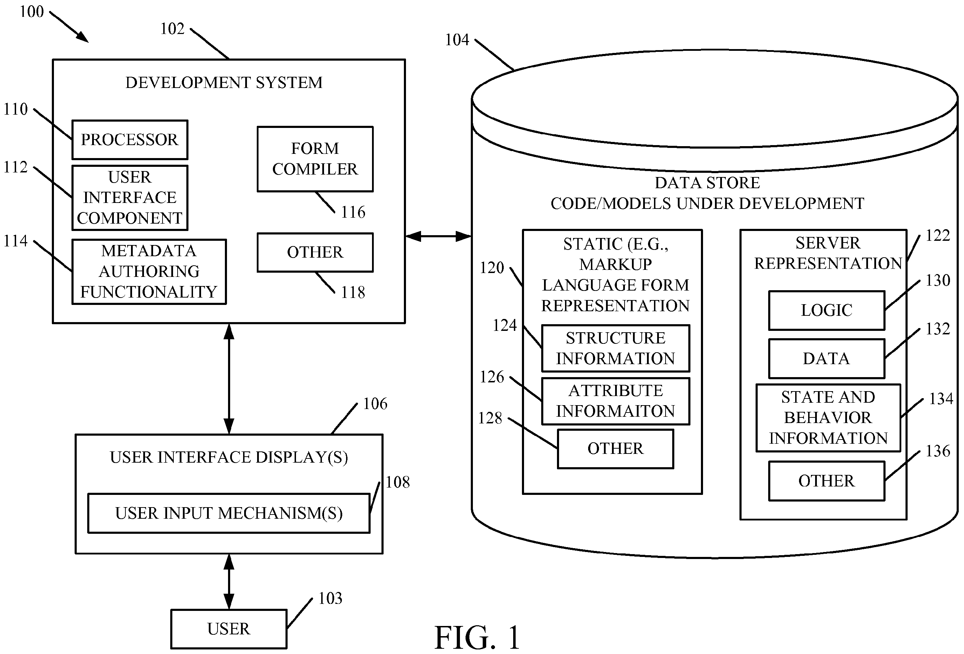

Figure 1 shows a block diagram of one example of a development environment 100 that can be used to develop a form or other mechanism by which information is displayed to a user 103. Development environment 100 can include development system 102 and data store 104. In the example shown in Figure 1, development system 102 is shown generating user interface displays 106 with user input mechanisms 108 for interaction by user 103. User 103 can be a developer that is developing models or code, using development system 102, and that are stored in data store 104. User 103 illustratively interacts with user input mechanisms 108 to control and manipulate system 102.

Development system 102, itself, illustratively includes processor 110, user interface component 112, metadata authoring functionality 114, form compiler 116, and it can include other items 118 as well. Data store 104 illustratively includes a static (e.g., markup language) form representation 120 for each form modeled by user 102. It also illustratively includes a server representation 122. The static form representation 120 illustratively includes structural information 124 that defines an overall hierarchical structure of the corresponding form. It can include attribute information 126, and other information 128 as well. Also, in one example, it can include some data binding information indicative of data sources that are bound to the corresponding form.

Server representation 122 can include logic 130, data and other data binding information 132, state and behavioral information 134 corresponding to the form and it can include other items 136 as well.

Before describing the overall operation of environment 100 in more detail, a brief overview will be provided. User interface component 112, either itself or under the control of other items in development system 102, illustratively generates user interface displays 106 with user input mechanisms 108. User 103 illustratively uses user input mechanisms 108 in order to access metadata authoring functionality 114 to author metadata that represents a given form. Metadata authoring functionality 114 is illustratively functionality provided in development system 102 or in another development tool that allows user 103 to author metadata or other data that defines forms or other representation mechanisms. For the sake of the present discussion, in one example, the term "form" will be used to mean any mechanism by which information is displayed to a user.

Form compiler 116 illustratively compiles the metadata input by user 102 in developing forms into static form representation 120 and the server representation 122. The static representation 120 can illustratively be a representation that the server can use to send the form to a requesting client. For example, it can be a JSON representation of the form. In one example, it contains the form control hierarchy (defined by structural information 124) along with a set of properties and other optional data binding information (defined by attribute information 126) that can be used by a browser in a runtime environment in order to generate a renderable version of the form, in the browser. Compiler 116 also illustratively generates a markup language (e.g., XML) version of the form represented by server representation 122.

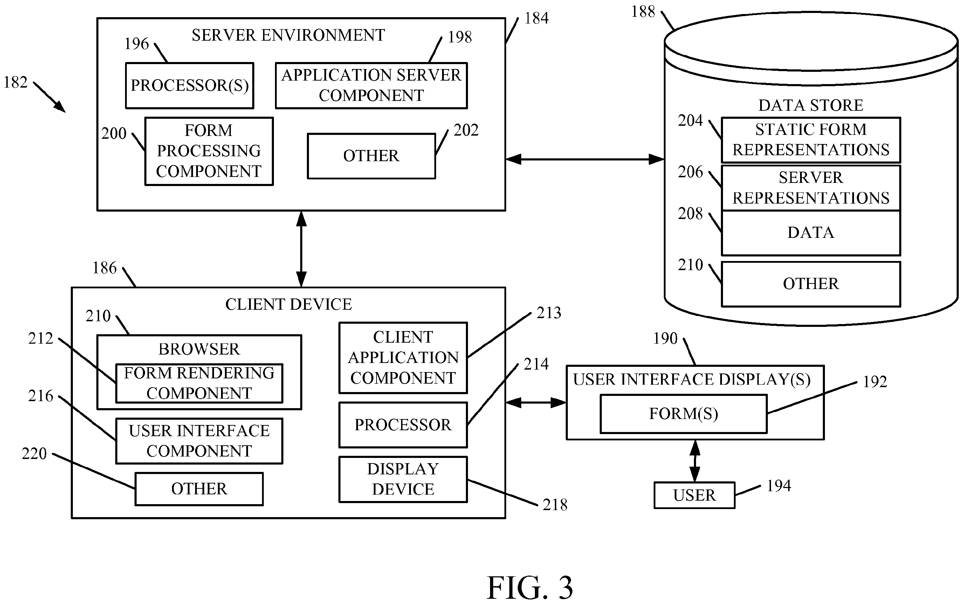

Thus, as described in greater detail below with respect to Figure 3, during runtime, a browser on a client device can request a form from a server-based system and will receive the static representation 120. The client can then begin constructing the renderable version of the form, while the server performs logic 130 associated with the form and also obtains data 132 and any state and behavior information 134. When the server request is completed, that information can be sent to the browser on the client device where it is merged with the renderable version already created using the static form representation 120, to obtain the final rendered version of the form.

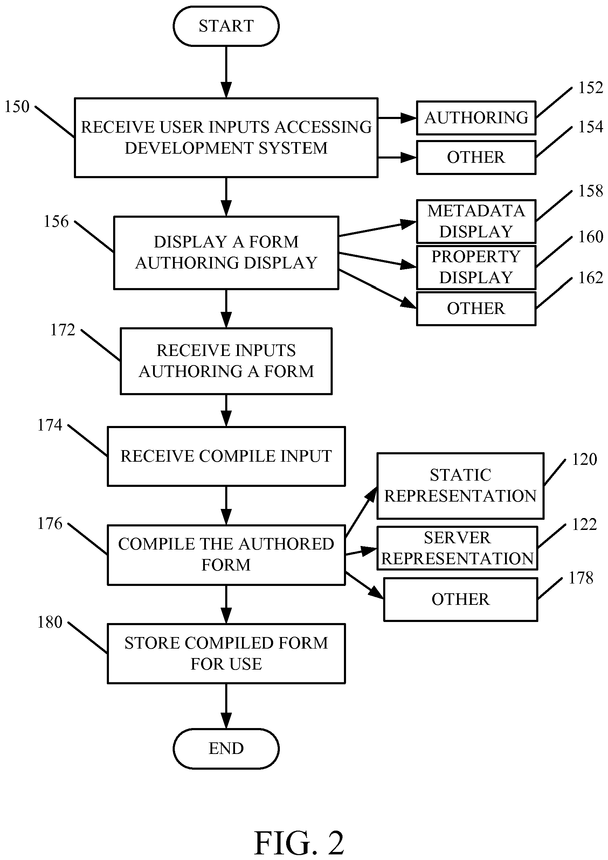

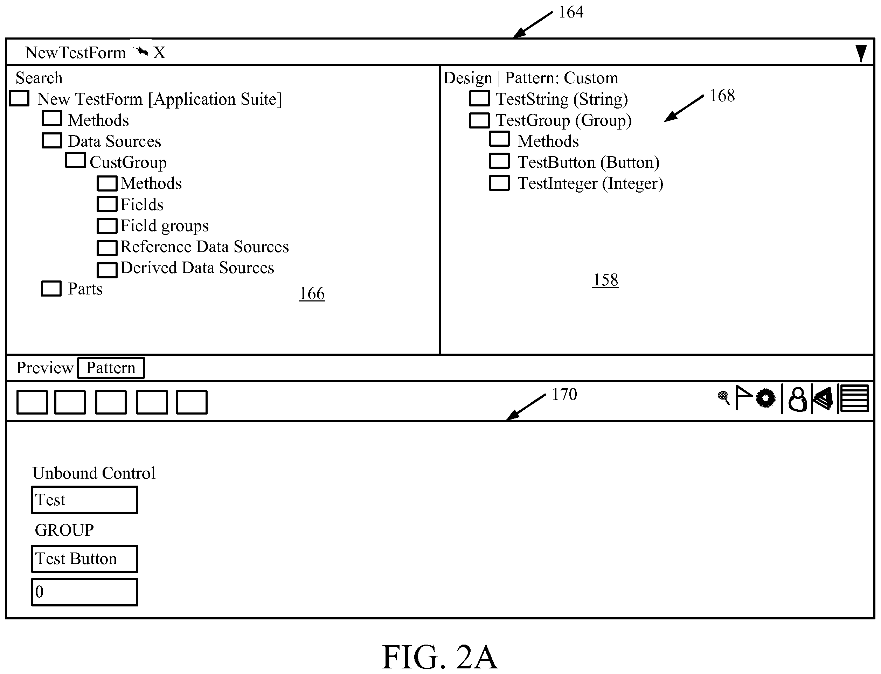

Figure 2 is a flow diagram illustrating one example of the operation of environment 100, shown in Figure 1, in authoring and compiling a form. Development system 100 first receives user inputs from user 103 indicating that user 103 wishes to access development system 103 in order to develop a form. This is indicated by block 150 in Figure 2. This can, for instance, be authentication information 152 or other information 154.

User interface component 112 then displays a form authoring display so that user 103 can access metadata authoring functionality 114 in order to author the form. Displaying the form authoring display is indicated by block 156. It can include a metadata display 158, a property display 160, and other display sections 162.

Figure 2A shows one example of a form authoring display 164. It can be seen that, in one example, display 164 includes an explorer display section 166 that allows the developer to look for various forms. It also illustratively includes a metadata display section 158 that allows the developer to author metadata. The example shown in Figure 2A shows one example of a hierarchical metadata structure 168 that represents a form. Preview section 170 shows a preview of what the form represented by metadata structure 168 will look like when it is rendered during runtime.

Development system 102 receives inputs on metadata authoring functionality 114 in order to author the form. This is indicated by block 172 in the flow diagram of Figure 2. Therefore, the developer can modify or add to the metadata structure 168 to further develop the form generally displayed at 170.

At some point, form compiler 116 compiles the authored form. In one example, this can be performed every time the user saves the form that is being authored. In another example, compiler 116 can automatically compile the form intermittently, or on a periodic basis. Of course, the compiling can be performed at other times as well. Receiving a compile input indicating that form compiler 116 is to compile the form is indicated by block 174 in the flow diagram of Figure 2.

Form compiler 116 then compiles the authored form, as indicated by block 166. In doing so, as discussed above, form compiler 116 generates static form representation 120, server representation 122, and it can generate other items 178, as well. Compiler 116 reflects over the metadata in hierarchical structure 168 to generate the static version 120 of the form. The static version 120 can be represented, for example, using a JSON string or other descriptors that are understandable by a runtime browser that will be rendering the form. In any case, the static representation 120 can be used by the browser to create a markup language form (e.g., an HTML form) that is a complete representation of the modeled form, but does not have the results of the logic, all the data bindings, and the state and behavior information, for the form. This information will be provided by the server during runtime.

Table 1 below shows one example of a compiled file that represents a static form representation 204 of the example form shown in Figure 2A. In order to generate the static representation, form compiler 116 reflects over the modeled metadata structure 168 and generates the static representation of the form. By static, it is meant that the representation does not include the results of logic or code associated with the form. In one example, it is a JSON representation, but it can be other representations as well. It can be seen in Table 1 that this representation, includes the control hierarchy structure, and properties, needed to create a visually valid representation of the form. It can also optionally include some data binding information. This is done as an intermediate step when the form is compiled.

**Table 1**

| |
|---|
| ```
{
 "ChildControlViewDescriptors": {
 "TestString": {
   "ChildControlViewDescriptors": {
   },
   "Properties": {
     "Value": "Test",
     "Label": "Unbound Control",
     "name": "TestString",
     "controlType": "Input",
     "controlView": "Input"
   },
   "TypeName": "Input",
   "BindingPath": "TestString"
},
 "TestGroup": {
   "ChildControlViewDescriptors": {
     "TestButton": {
      "ChildControlViewDescriptors": {
      },
      "Properties": {
        "Label": "Test Button",
        "name": "TestButton",
        "controlType": "Button",
        "controlView": "Button"
      },
      "TypeName": "Button",
      "BindingPath": "TestButton"
     },
     "Testlnteger": {
      "ChildControlViewDescriptors": {
      },
      "Properties": {
        "name": "TestInteger",
        "Value": $field("IntField", $model("TestTable", $data.DataSource)),
        "controlType": "Integer",
        "controlView": "Integer"
      },
      "TypeName": "Integer",
      "BindingPath": "TestInteger"
}
   },
   "Properties": {
     "Label": "Group",
     "name": "TestGroup",
     "controlType": "Group",
     "controlView": "Group"
   },
   "TypeName": "Group",
   "BindingPath": "TestGroup"
}
   },
   "Properties": {
 "DataSource": "TestTable",
 "Name": "NewTestForm",
 "name": "NewTestForm_form",
 "FormStyle": "Auto",
 "formView": "Form"
 },
 "TypeName": "Form",
 "ViewModelName": "NewTestForm_form"
``` |

Form compiler 116 then stores the compiled form in data store 104, for runtime use. This is indicated by block 180 in Figure 2.

Figure 3 is a block diagram of one example of a server-based runtime environment 182. Environment 182 illustratively includes server environment 184, client device 186, and data store 188. The example shown in Figure 3 shows that client device 186 generates user interface displays 190 for displaying forms 192 for interaction by user 194.

Server environment 184 illustratively includes one or more processors 196, application server component 198, form processing component 200, and it can include other items 202 as well. Data store 188 illustratively stores the static form representations 204 and server representations 206 of the forms that are used by the application run by application server component 198. It can include data sources 208, and other items 210 as well. Client device 186 illustratively includes browser 210 that includes a form rendering component 212. Client device 186 can also include processor 214, user interface component 216, display device 218, and it can include other items 220 as well. Before describing the overall operation of environment 182 in more detail, a brief overview will be provided.

Application server component 198 illustratively runs applications (such as business system applications or other applications) that use the forms and data represented by the various representations and data stored in data store 188. Form processing component 200 illustratively processes requests for forms. Client application component 213 illustratively runs a client side portion of the applications served by application server component 198. Thus, user 194 can request the display of forms 192 through client application 213. User interface component 216 illustratively, either by itself or under the control of other items, generates the user interface displays 190 on a display device 218 on client device 186.

When user 194 requests the presentation of a form 192, browser 210 provides this request to server environment 184. Form processing component 200 retrieves the static form representation 204 for the requested form and provides it directly to client device 186. Form rendering component 212 generates a markup language, renderable, version of the requested form using the static form representation. That renderable version of the form will illustratively be a complete rendering of a form, less the results of any logic that is to be run with respect to the form, and less the behavior and state information (and some data and data bindings) that are generated by application server component 198 based on the server representation 206. The server representation 206 is provided to application server component 198 where the other information is generated (e.g., the logic associated with the form is run, the data and data bindings are obtained, the behavioral and state information is obtained, etc.). That additional information is then provided to form rendering component 212 where it is merged with the renderable version of the form that has already been generated (or that is being generated) by form rendering component 212. Once merged, the entire form is rendered by form rendering component 212, within browser 210, for display to user 194.

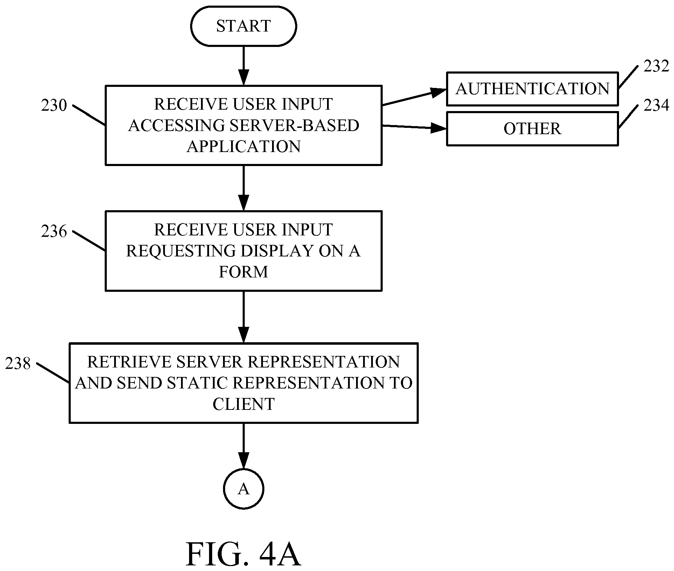

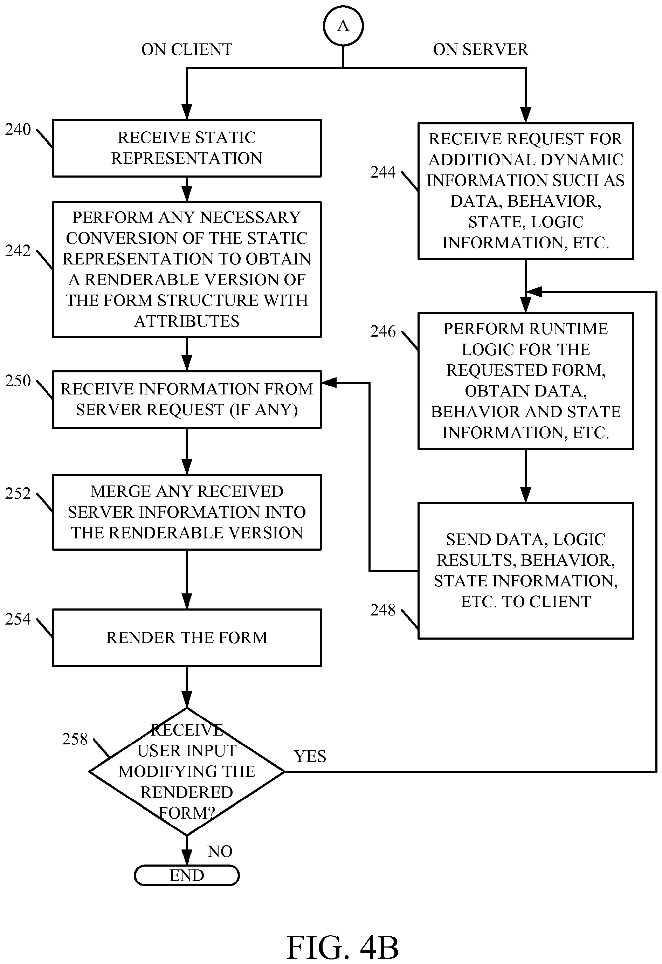

Figures 4A and 4B (collectively Figure 4) show a flow diagram illustrating one example of the operation of server-based runtime environment 182. Server environment 184 first receives a user input accessing a server-based application. This is indicated by block 230 in Figure 4. This can take the form of authentication information 232 or other information 234.

Client application component 213, in conjunction with application server component 198, then generates user interface displays 190 that allow user 194 to control and manipulate the server-based application. At some point, the user 194 will provide an input requesting the display of a given form 192. Receiving such an input is indicated by block 236 in the flow diagram of Figure 4.

This request will illustratively be provided from browser 210 to form processing component 200 in server environment 184. Form processing component 200 then retrieves the static form representation 204 for the requested form and provides it to form rendering component 212 on client device 186. It also illustratively obtains the server representation 206 for the requested form and provides it to application server component 198 so that component 198 can perform any server-side processing that is needed to obtain dynamic information that is used to completely render the form, with its current data, state information, behavior information, etc. Retrieving the server representation 206 and static form representation 204 and providing them to server environment 184 in client device 186, respectively, is indicated by block 238 in Figure 4.

At this point in Figure 4, processing commences on both the client device 186 and on server environment 184. The form rendering component 212 in the browser 210 on client 186 receives the static representation of the requested form. This is indicated by block 240. It then performs any necessary conversion of the static representation to obtain a renderable version of the form structure, along with its attributes. This is indicated by block 242. The form generated at this point in the processing is a full working version of the form, but it does not include the information to be provided by the server, if any.

At the same time, a request is sent to application server component 198 by form processing component 200, requesting any additional state or behavior information, requesting server component 198 to perform any logic associated with the form, and to obtain any additional data, if it exists, for the requested form. Receiving the request at application server component 198 is indicated by block 244 in Figure 4. Application server component 198 then performs the various operations needed to obtain this additional information, if any. This is indicated by block 256. It then sends the data, logic results, behavior and state information, etc., to form rendering component 212 in browser 210. This is indicated by block 248. The server representation of the form that is generated and sent to form rendering component 212 can be a full representation of the form, in a descriptor format that is the same format as the static representation. Therefore, the dynamic information (e.g., data, state information, behavior information, logic results, etc.) can be identified by component 212 as deltas and applied as deltas. In another example, the descriptors that are sent from the server can represent only the deltas (or changes) from the already-created, renderable version of the requested form. In either case, receiving that information from the server at form rendering component 212, is indicated by block 250.

Form rendering component 212 then augments the already-created, renderable version of the requested form with any information received from the application server component 198. This is done by merging that information with the already-created form in order to obtain an updated visualization and state of the requested form. This is indicated by block 252. The merging is illustratively done by applying the deltas obtained from the dynamic information sent by the server to the already-created form. Form rendering component 212 then renders the requested form in browser 210 for display on user interface displays 190 to user 194. Rendering the form is indicated by block 254.

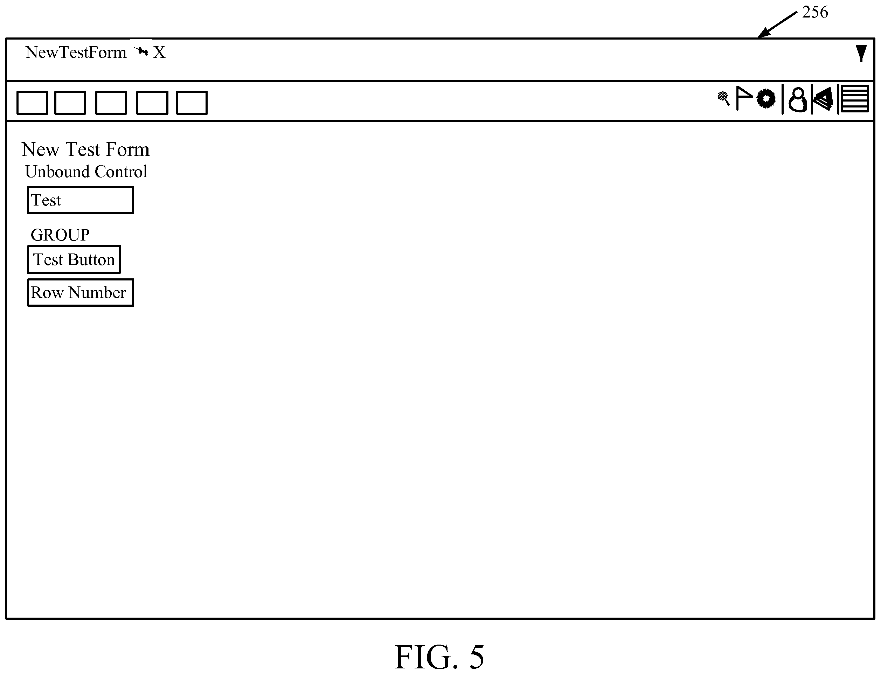

Figure 5A shows one example of a user interface display 256. User interface display 256 shows an example of the rendered form described above with respect to Figure 2A and Table 1. Once the requested form is rendered for user 194, the user may interact with the form (such as by filling in fields, actuating displayed controls, etc.). Information representing these user interactions can be transmitted to application server component 198 for processing. For instance, it may be that some user interactions will invoke further logical operations or running of business logic or other code associated with the form. It may also be that user interactions may invoke server-side processing in other ways. If this is the case, then processing reverts to block 246 where application server component 198 performs the processing that is triggered by the user interactions. It then sends the result of that processing back to rendering component 212 in browser 210 so that the results can be rendered. It will be noted, however, that in one example, the modifications are sent in the form of deltas, that represent changes from the existing form, instead of as an entirely new form representation. In this way, form rendering component 212 can apply the deltas to the rendered version of the form, without having to recalculate an entire renderable version of the form. In another example, the server representation represents the entire form and rendering component 212 on the client identifies the differences (or deltas) and applies them to the renderable version of the form it has already generated. Receiving user interactions is indicated by block 258 in Figure 4.

It can this be seen that compiling an authored form into a static representation and its corresponding server-based representation can be used to improve form rendering performance. While the browser 210 waits for server application component 198 to run and execute all the logic and then return the results to browser 210, the form rendering component 212 in browser 210 can begin creating the document object model, or other structure, for the form on the client side using the static representation. These two types of processing can be performed in parallel. Therefore, when the application server component 198 returns any additional descriptors for the form, then only the deltas (the changes between what has already been generated as a renderable form and the additional information) are applied. The description can be sent as deltas or the deltas can be identified on the client. This improves rendering performance. The same can be done as the user interacts with the form.

The present discussion has mentioned processors and servers. In one example the processors and servers include computer processors with associated memory and timing circuitry, not separately shown. They are functional parts of the systems or devices to which they belong and are activated by, and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

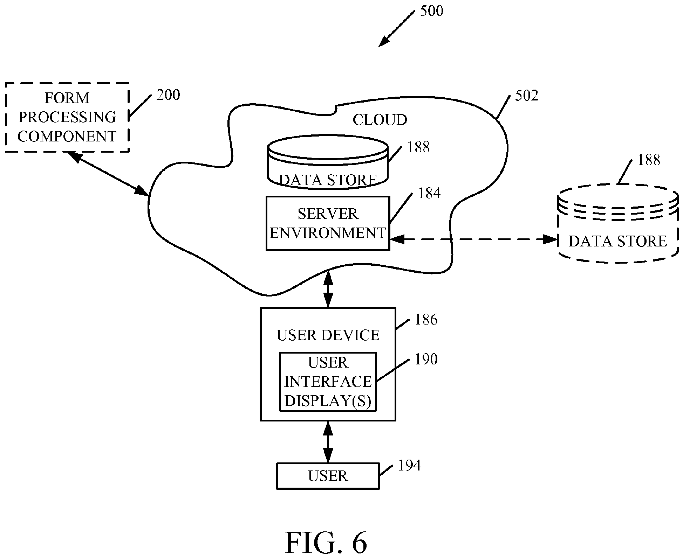

Figure 6 is a block diagram of the runtime environment 182, shown in Figure 3, except that its elements are disposed in a cloud computing architecture 500. Cloud computing provides computation, software, data access, and storage services that do not require end-user knowledge of the physical location or configuration of the system that delivers the services. In various examples, cloud computing delivers the services over a wide area network, such as the internet, using appropriate protocols. For instance, cloud computing providers deliver applications over a wide area network and they can be accessed through a web browser or any other computing component. Software or components of architecture 100 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, they can be provided from a conventional server, or they can be installed on client devices directly, or in other ways.

The description is intended to include both public cloud computing and private cloud computing. Cloud computing (both public and private) provides substantially seamless pooling of resources, as well as a reduced need to manage and configure underlying hardware infrastructure.

A public cloud is managed by a vendor and typically supports multiple consumers using the same infrastructure. Also, a public cloud, as opposed to a private cloud, can free up the end users from managing the hardware. A private cloud may be managed by the organization itself and the infrastructure is typically not shared with other organizations. The organization still maintains the hardware to some extent, such as installations and repairs, etc.

In the example shown in Figure 6, some items are similar to those shown in Figure 3 and they are similarly numbered. Figure 6 specifically shows that server environment 184 and data store 188 can be located in cloud 502 (which can be public, private, or a combination where portions are public while others are private). Therefore, user 194 uses user device 186 to access those systems through cloud 502.

Figure 6 also depicts another example of a cloud architecture. Figure 6 shows that it is also contemplated that some elements of environment 182 can be disposed in cloud 502 while others are not. By way of example, data store 188 can be disposed outside of cloud 502, and accessed through cloud 502. In another example form processing component 200 can also be outside of cloud 502. Regardless of where they are located, they can be accessed directly by device 186, through a network (either a wide area network or a local area network), they can be hosted at a remote site by a service, or they can be provided as a service through a cloud or accessed by a connection service that resides in the cloud. All of these architectures are contemplated herein.

It will also be noted that environment 182, or portions of it, can be disposed on a wide variety of different devices. Some of those devices include servers, desktop computers, laptop computers, tablet computers, or other mobile devices, such as palm top computers, cell phones, smart phones, multimedia players, personal digital assistants, etc.

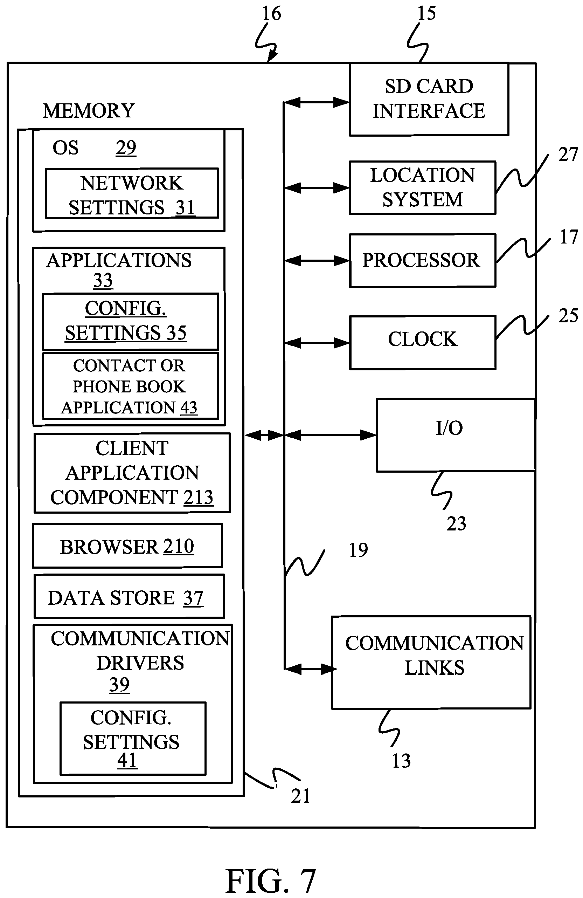

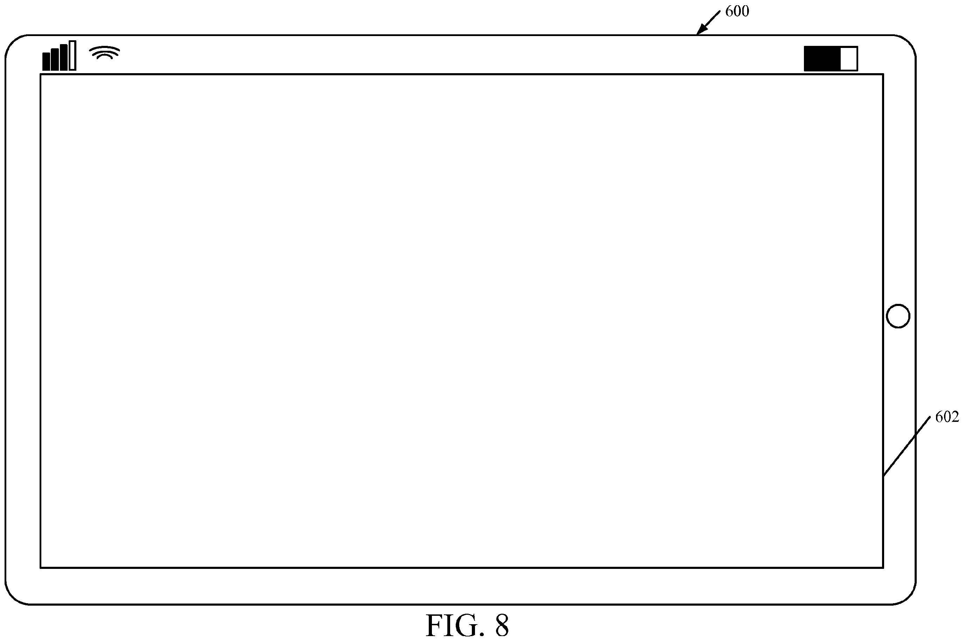

Figure 7 is a simplified block diagram of one illustrative example of a handheld or mobile computing device that can be used as a user's or client's hand held device 16, in which the present system (or parts of it) can be deployed. Figures 8-9 are examples of handheld or mobile devices.

Figure 7 provides a general block diagram of the components of a client device 16 that can run components of environments 100 or 182 or that interacts with theses environments, or both. In the device 16, a communications link 13 is provided that allows the handheld device to communicate with other computing devices and under some examples provides a channel for receiving information automatically, such as by scanning. Examples of communications link 13 include an infrared port, a serial/USB port, a cable network port such as an Ethernet port, and a wireless network port allowing communication though one or more communication protocols including General Packet Radio Service (GPRS), LTE, HSPA, HSPA+ and other 3G and 4G radio protocols, 1Xrtt, and Short Message Service, which are wireless services used to provide cellular access to a network, as well as 802.11 and 802.11b (Wi-Fi) protocols, and Bluetooth protocol, which provide local wireless connections to networks.

Under other examples, applications or systems are received on a removable Secure Digital (SD) card that is connected to a SD card interface 15. SD card interface 15 and communication links 13 communicate with a processor 17 (which can also embody processors 110, 196 or 214 from Figures 1 and 3) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, multi-touch sensors, optical or video sensors, voice sensors, touch screens, proximity sensors, microphones, tilt sensors, and gravity switches and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Similarly, device 16 can have a client application component 213 which can run various business applications, and browser 210. Processor 17 can be activated by other components to facilitate their functionality as well.

Examples of the network settings 31 include things such as proxy information, Internet connection information, and mappings. Application configuration settings 35 include settings that tailor the application for a specific enterprise or user. Communication configuration settings 41 provide parameters for communicating with other computers and include items such as GPRS parameters, SMS parameters, connection user names and passwords.

Applications 33 can be applications that have previously been stored on the device 16 or applications that are installed during use, although these can be part of operating system 29, or hosted external to device 16, as well.

Figure 8 shows one example in which device 16 is a tablet computer 600. In Figure 8, computer 600 is shown with user interface display screen 602. Screen 602 can be a touch screen (so touch gestures from a user's finger can be used to interact with the application) or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 600 can also illustratively receive voice inputs as well.

Additional examples of devices 16 can also be used. For instance, device 16 can be a smart phone or mobile phone 45. The phone can include a set of keypads for dialing phone numbers, a display capable of displaying images including application images, icons, web pages, photographs, and video, and control buttons for selecting items shown on the display. The phone can include an antenna for receiving cellular phone signals such as General Packet Radio Service (GPRS) and 1Xrtt, and Short Message Service (SMS) signals. In some examples, the phone also includes a Secure Digital (SD) card slot that accepts a SD card.

The device can also be a personal digital assistant (PDA) or a multimedia player or a tablet computing device, etc. (hereinafter referred to as PDA. The PDA can include an inductive screen that senses the position of a stylus (or other pointers, such as a user's finger) when the stylus is positioned over the screen. This allows the user to select, highlight, and move items on the screen as well as draw and write. The PDA can also include a number of user input keys or buttons which allow the user to scroll through menu options or other display options which are displayed on the display, and allow the user to change applications or select user input functions, without contacting the display. Although not shown, the PDA can include an internal antenna and an infrared transmitter/receiver that allow for wireless communication with other computers as well as connection ports that allow for hardware connections to other computing devices. Such hardware connections are typically made through a cradle that connects to the other computer through a serial or USB port. As such, these connections are non-network connections.

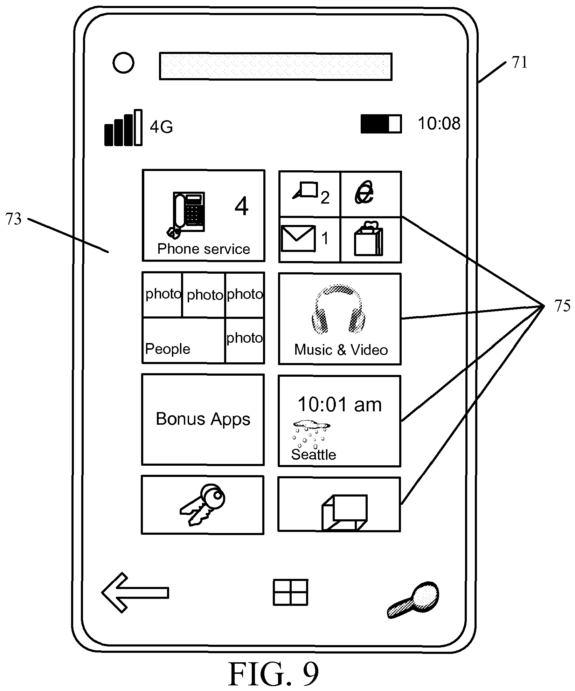

Figure 9 is one example of a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

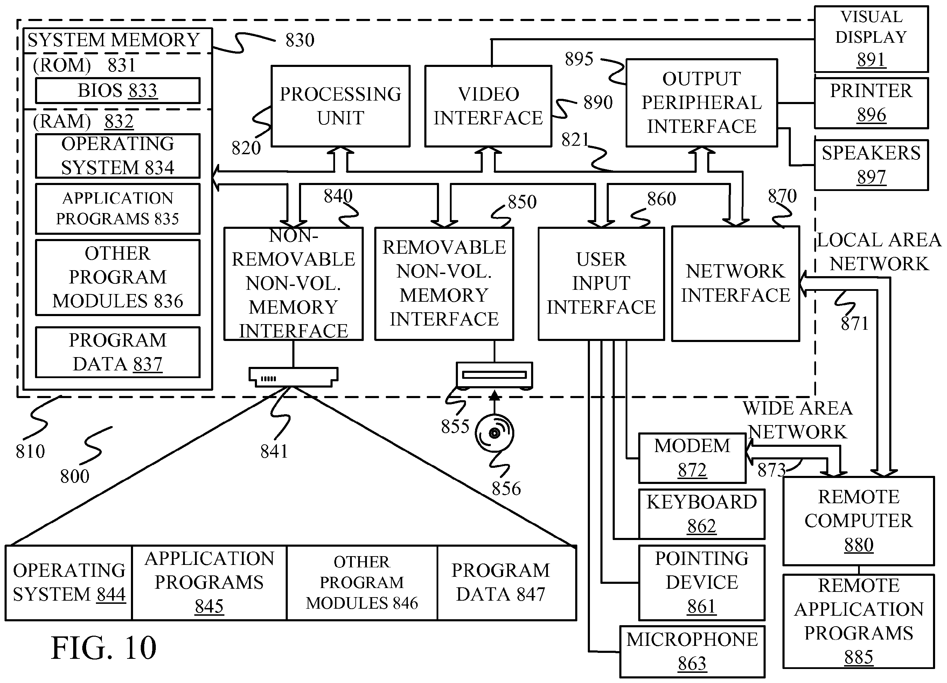

Figure 10 is one example of a computing environment that can be used in environments 100 and 182. With reference to Figure 10, an example system for implementing some embodiments includes a general-purpose computing device in the form of a computer 810. Components of computer 810 may include, but are not limited to, a processing unit 820 (which can comprise processor 110, 196 or 214), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to Figure 1 can be deployed in corresponding portions of Figure 10.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, Figure 10 illustrates operating system 834, application programs 835, other program modules 836, and program data 837.

The computer 810 may also include other removable/non-removable volatile/nonvolatile computer storage media. By way of example only, Figure 10 illustrates a hard disk drive 841 that reads from or writes to non-removable, nonvolatile magnetic media, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and optical disk drive 855 is typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The drives and their associated computer storage media discussed above and illustrated in Figure 10, provide storage of computer readable instructions, data structures, program modules and other data for the computer 810. In Figure 10, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in Figure 10 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, Figure 10 illustrates remote application programs 885 as residing on remote computer 880. It will be appreciated that the network connections shown are exemplary and other means of establishing a communications link between the computers may be used.

It should also be noted that the different embodiments described herein can be combined in different ways. That is, parts of one or more embodiments can be combined with parts of one or more other embodiments. All of this is contemplated herein.
Example 1 is a computing system, comprising:
   a display device; and
   a form rendering component on a client device configured to obtain, from a server, a static representation of a form that represents a structure of display elements on the form, generate a renderable representation of the form, merge dynamic information for the form, received from the server, into the renderable representation of the form to obtain a form visualization, and render the form visualization on the display device.
Example 2 is the computing system of any and all previous examples wherein the form rendering component is configured to receive the dynamic information and to apply differences between the renderable representation, prior to merging the dynamic information, and the dynamic information, to the renderable representation to obtain the form visualization.
Example 3 is the computing system of any and all previous examples wherein the form rendering component receives the dynamic information as a server representation of the form and identifies the differences for application to the renderable representation.
Example 4 is the computing system of any and all previous examples wherein the form rendering component receives the dynamic information from the server with the differences identified by the server.
Example 5 is the computing system of any and all previous examples wherein the form rendering component generates the renderable representation of the form, from the static representation, as a functional representation of the form, without the dynamic information.
Example 6 is the computing system of any and all previous examples wherein the form rendering component comprises a browser on the client device.
Example 7 is the computing system of any and all previous examples and further comprising:
a client application component configured to receive a user input requesting display of a form and send a request to the server to obtain the static representation of the form and to send a request to the server to obtain the dynamic information.
Example 8 is a computing system, comprising:
   an application server component, on a server, configured to receive a client request, from a client, requesting a form and to, in response, send the client a static representation of the form; and
   a form processing component, on the server, configured to generate, based on the client request, dynamic information for the form and send the dynamic information to the client, separately from the static representation.
Example 9 is the computing system of any and all previous examples wherein the application server component is configured to send the static representation of the form in a descriptor format that describes a functional representation of the form.
Example 10 is the computing system of any and all previous examples wherein the form processing component is configured to generate the dynamic information in the descriptor format.
Example 11 is the computing system of any and all previous examples wherein the form processing component is configured to obtain a server representation of the form, that is different from the static representation of the form, and generate the dynamic information from the server representation.
Example 12 is the computing system of claim 11 wherein the form processing component is configured to generate the dynamic information by obtaining data that populates the form.
Example 13 is the computing system of any and all previous examples wherein the form processing component is configured to generate the dynamic information to include form state information indicative of a state of controls on the form.
Example 14 is the computing system of any and all previous examples wherein the form processing component is configured to generate the dynamic information by running runtime logic corresponding to the form to obtain logic results.
Example 14 is a method, comprising:
   receiving form authoring inputs, in a development system, indicative of metadata defining a form;
   generating a static representation of the form based on the metadata, the static representation of the form including structural information indicative of a control structure on the form and attribute information indicative of properties of the form; and
   generating, separately from the static representation, a server representation of the form based on the metadata, the server representation being indicative of dynamic information for the form.
Example 15 is the method of any and all previous examples and further comprising:
   receiving a compile user input and generating the static and server representations in response to the compile user input.
Example 16 is the method of any and all previous examples and further comprising:
   saving the static and server representations in a data store for runtime access.
Example 17 is the method of any and all previous examples wherein generating the static representation comprises:
   reflecting over the metadata to identify the structural information and the attribute information.
Example 18 is the method of any and all previous examples wherein generating the static representation comprises:
   generating the static representation with sufficient information for rendering a functional version of the form, based on the static representation.
Example 19 is the method of any and all previous examples wherein generating the static representation comprises generating the static representation in a descriptor format and wherein generating the server representation comprises generating the server representation in the descriptor format.
Example 20 is the method of any and all previous examples and further comprising:
   displaying a form preview of the form in the development system, based on the static representation.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing system, comprising:
an application server component, (198) on a server, configured to receive a client request,
from a client comprising a browser, (210) requesting a form and to, in response, send the client a static representation of the form; and
a form processing component, (200) on the server, configured to generate, based on the client request, dynamic information for the form and send the dynamic information to the client, separately from the static representation;
**characterized in that** the server application component is adapted to execute logic to obtain dynamic information and return it to the browser while a form rendering component (212) of the browser creates a document object model or other structure for the form on the client side using the static information, wherein the execution of the dynamic information at the server application component and creating of the document object model are performed in parallel.

2. The computing system of claim 1 wherein the application server component is configured to send the static representation of the form in a descriptor format that describes a functional representation of the form.

3. The computing system of claim 2 wherein the form processing component is configured to generate the dynamic information in the descriptor format.

4. The computing system of claim 3 wherein the form processing component is configured to obtain a server representation of the form, that is different from the static representation of the form, and generate the dynamic information from the server representation.

5. The computing system of claim 4 wherein the form processing component is configured to generate the dynamic information by obtaining data that populates the form.

6. The computing system of claim 5 wherein the form processing component is configured to generate the dynamic information to include form state information indicative of a state of controls on the form.

7. A computing system, comprising:
a display device (190)
a client device; (186) and
on the client device, a browser comprising a form rendering component (212) the form rendering component on the client device configured to obtain, from a server, a static representation of a form that represents a structure of display elements on the form, generate a renderable representation of the form, merge dynamic information for the form, received from the server, into the renderable representation of the form to obtain a form visualization, and control the display to device to render the form visualization on the display device;
**characterized in that** the form rendering component is adapted to start creating a document object model or other structure for the form on the client side using the static representation while the browser waits for logic to be executed and returned as dynamic information from a server application component of the server, wherein execution of the dynamic information at the server application component and creating of the document object model are performed in parallel.

8. The computing system of claim 7 wherein the form rendering component is configured to receive the dynamic information and to apply differences between the renderable representation, prior to merging the dynamic information, and the dynamic information, to the renderable representation to obtain the form visualization.

9. The computing system of claim 8 wherein the form rendering component receives the dynamic information as a server representation of the form and identifies the differences for application to the renderable representation.

10. The computing system of claim 8 wherein the form rendering component receives the dynamic information from the server with the differences identified by the server.

11. The computing system of claim 8 wherein the form rendering component generates the renderable representation of the form, from the static representation, as a functional representation of the form, without the dynamic information.

12. The computing system of claim 11 wherein the form rendering component comprises a browser on the client device.

13. The computing system of claim 11 and further comprising:
a client application component configured to receive a user input requesting display of a form and send a request to the server to obtain the static representation of the form and to send a request to the server to obtain the dynamic information.

14. A method, comprising:
detecting form authoring inputs, in a development system, indicative of metadata defining a form;
generating a static representation of the form based on the metadata, the static representation of the form including structural information indicative of a control structure on the form and attribute information indicative of properties of the form; and
generating, separately from the static representation, a server representation of the form based on the metadata, the server representation being indicative of dynamic information for the form, **characterized in that** the static representation is created in parallel to the dynamic information being returned as results of executing logic.

15. The method of claim 14 and further comprising:
receiving a compile user input and generating the static and server representations in response to the compile user input.

## Patentansprüche

1. Computersystem, umfassend:
eine Anwendungsserverkomponente (198) auf einem Server, ausgebildet zum Empfangen einer Clientanforderung von einem Client umfassend einen ein Formular anfordernden Browser (210) und zum Senden einer statischen Darstellung des Formulars an den Client als Antwort; und
eine Formularverarbeitungskomponente (200) auf dem Server, ausgebildet zum Erzeugen einer dynamischen Information für das Formular auf der Basis der Clientanforderung und zum Senden der dynamischen Information an den Client getrennt von der statischen Darstellung;
**dadurch gekennzeichnet, dass**
die Serveranwendungskomponente zum Ausführen einer Logik zum Erhalten der dynamischen Information und Zurückgeben an den Browser geeignet ist, während eine Formularwiedergabekomponente (212) des Browsers ein Dokumentobjektmodell oder eine andere Struktur für das Formular auf der Clientseite unter Verwendung der statischen Information erzeugt, wobei das Ausführen der dynamischen Information auf der Serveranwendungskomponente und das Erzeugen des Dokumentobjektmodells parallel durchgeführt werden.

2. Computersystem nach Anspruch 1, wobei die Anwendungsserverkomponente zum Senden der statischen Darstellung des Formulars in einem Deskriptorenformat, das eine funktionale Darstellung des Formulars beschreibt, ausgebildet ist.

3. Computersystem nach Anspruch 2, wobei die Formularverarbeitungskomponente zum Erzeugen der dynamischen Information im Deskriptorenformat ausgebildet ist.

4. Computersystem nach Anspruch 3, wobei die Formularverarbeitungskomponente zum Erhalten einer Serverdarstellung des Formulars, die sich von der statischen Darstellung des Formulars unterscheidet, und Erzeugen der dynamischen Information aus der Serverdarstellung ausgebildet ist.

5. Computersystem nach Anspruch 4, wobei die Formularverarbeitungskomponente zum Erzeugen der dynamischen Information durch Erhalten von Daten, die das Formular auffüllen, ausgebildet ist.

6. Computersystem nach Anspruch 5, wobei die Formularverarbeitungskomponente zum Erzeugen der dynamischen Information zum Beinhalten einer einen Zustand von Steuerelementen auf dem Formular angebenden Formularzustandsinformation ausgebildet ist.

7. Computersystem, umfassend:
eine Anzeigevorrichtung (190);
eine Clientvorrichtung (186);
auf der Clientvorrichtung einen Browser umfassend eine Formularwiedergabekomponente (212), wobei die Formularwiedergabekomponente auf der Clientvorrichtung zum Erhalten einer statischen Darstellung eines Formulars, die eine Struktur von Anzeigeelementen auf dem Formular darstellt, Erzeugen einer wiedergebbaren Darstellung des Formulars, Zusammenführen von dynamischen Informationen für das vom Server empfangene Formular zur wiedergebbaren Darstellung des Formulars zum Erhalten einer Formularvisualisierung und Steuern der Anzeige auf der Vorrichtung zum Wiedergeben der Formularvisualisierung auf der Anzeigevorrichtung ausgebildet ist;
**dadurch gekennzeichnet, dass**
die Formularwiedergabekomponente zum Starten des Erzeugens eines Dokumentobjektmodells oder einer anderen Struktur für das Formular auf der Clientseite unter Verwendung der statischen Darstellung geeignet ist, während der Browser auf das Ausführen einer Logik und Rückgabe als dynamische Information von einer Serveranwendungskomponente auf dem Server wartet, wobei das Ausführen der dynamischen Information auf der Serveranwendungskomponente und Erzeugen des Dokumentobjektmodells parallel durchgeführt werden.

8. Computersystem nach Anspruch 7, wobei die Formularwiedergabekomponente zum Empfangen der dynamischen Information und zum Anwenden von Unterschieden zwischen der wiedergebbaren Darstellung vordem Zusammenführen der dynamischen Informationen und der dynamischen Information auf die wiedergebbare Darstellung zum Erhalten der Formularvisualisierung ausgebildet ist.

9. Computersystem nach Anspruch 8, wobei die Formularwiedergabekomponente die dynamische Information als eine Serverdarstellung des Formulars empfängt und die Unterschiede zur Anwendung auf die wiedergebbare Darstellung identifiziert.

10. Computersystem nach Anspruch 8, wobei die Formularwiedergabekomponente die dynamische Information vom Server mit den vom Server identifizierten Unterschieden empfängt.

11. Computersystem nach Anspruch 8, wobei die Formularwiedergabekomponente die wiedergebbare Darstellung des Formulars aus der statischen Darstellung als eine funktionale Darstellung des Formulars ohne die dynamische Information erzeugt.

12. Computersystem nach Anspruch 11, wobei die Formularwiedergabekomponente einen Browser auf der Clientvorrichtung umfasst.

13. Computersystem nach Anspruch 11 und ferner umfassend:
eine zum Empfangen einer Benutzereingabe zum Anfordern der Anzeige eines Formulars und Sendens einer Anforderung an den Server zum Erhalten der statischen Darstellung des Formulars und zum Senden einer Anforderung an den Server zum Erhalten der dynamischen Information ausgebildete Clientanwendungskomponente.

14. Verfahren, umfassend:
Erfassen von ein Formular definierende Metadaten angebenden Formular-Authoring-Eingaben in einem Entwicklungssystem;
Erzeugen einer statischen Darstellung des Formulars auf der Basis der Metadaten, wobei die statische Darstellung des Formulars eine Steuerstruktur auf dem Formular angebende strukturelle Informationen und Eigenschaften des Formulars angebende Attributinformationen umfasst; und
Erzeugen einer Serverdarstellung des Formulars getrennt von der statischen Darstellung auf der Basis der Metadaten, wobei die Serverdarstellung dynamische Informationen für das Formular angibt, **dadurch gekennzeichnet, dass** die statische Darstellung parallel zur Rückgabe der dynamischen Information als Ergebnis des Ausführens der Logik erzeugt wird.

15. Verfahren nach Anspruch 14 und ferner umfassend:
Empfangen einer Kompilierbenutzereingabe und Erzeugen von statischer Darstellung und Serverdarstellung als Reaktion auf die Kompilierbenutzereingabe.

## Revendications

1. Système informatique comprenant :
un composant de serveur d'applications (198) sur un serveur, configuré pour recevoir une demande de client d'un client comprenant un navigateur (210) demandant un formulaire et pour envoyer au client, en réponse, une représentation statique du formulaire ; et
un composant de traitement de formulaire (200) sur le serveur, configuré pour générer, en fonction de la demande du client, des informations dynamiques pour le formulaire et envoyer les informations dynamiques au client, séparément de la représentation statique ;
**caractérisé en ce que**
le composant d'application serveur est conçu pour exécuter une logique pour obtenir des informations dynamiques et les renvoyer au navigateur tandis qu'un composant de restitution de formulaire (212) du navigateur crée un modèle d'objet de document ou une autre structure pour le formulaire côté client en utilisant les informations statiques, dans lequel l'exécution des informations dynamiques au niveau du composant d'application serveur et la création du modèle d'objet de document s'effectuent en parallèle.

2. Système informatique selon la revendication 1, dans lequel le composant de serveur d'applications est configuré pour envoyer la représentation statique du formulaire dans un format descripteur qui décrit une représentation fonctionnelle du formulaire.

3. Système informatique selon la revendication 2, dans lequel le composant de traitement de formulaire est configuré pour générer les informations dynamiques dans le format descripteur.

4. Système informatique selon la revendication 3, dans lequel le composant de traitement de formulaire est configuré pour obtenir une représentation de serveur du formulaire, qui est différente de la représentation statique du formulaire, et générer les informations dynamiques à partir de la représentation de serveur.

5. Système informatique selon la revendication 4, dans lequel le composant de traitement de formulaire est configuré pour générer les informations dynamiques en obtenant des données qui remplissent le formulaire.

6. Système informatique selon la revendication 5, dans lequel le composant de traitement de formulaire est configuré pour générer les informations dynamiques pour inclure des informations d'état de formulaire indiquant un état de commandes sur le formulaire.

7. Système informatique comprenant :
un dispositif d'affichage (190) ;
un dispositif client (186) ; et
sur le dispositif client, un navigateur comprenant un composant de restitution de formulaire (212), le composant de restitution de formulaire sur le dispositif client étant configuré pour obtenir, depuis un serveur, une représentation statique d'un formulaire qui représente une structure d'éléments d'affichage sur le formulaire, générer une représentation restituable du formulaire, fusionner des informations dynamiques pour le formulaire, reçues du serveur, en la représentation restituable du formulaire pour obtenir une visualisation de formulaire, et commander l'affichage sur le dispositif pour restituer la visualisation du formulaire sur le dispositif d'affichage ;
**caractérisé en ce que**
le composant de restitution de formulaire est conçu pour commencer à créer un modèle d'objet de document ou une autre structure pour le formulaire côté client en utilisant la représentation statique tandis que le navigateur attend que la logique soit exécutée et renvoyée sous forme d'informations dynamiques depuis un composant d'application serveur du serveur, dans lequel l'exécution des informations dynamiques au niveau du composant d'application serveur et la création du modèle d'objet de document s'effectuent en parallèle.

8. Système informatique selon la revendication 7, dans lequel le composant de restitution de formulaire est configuré pour recevoir les informations dynamiques et pour appliquer les différences entre la représentation restituable, avant la fusion des informations dynamiques, et les informations dynamiques à la représentation restituable pour obtenir la visualisation du formulaire.

9. Système informatique selon la revendication 8, dans lequel le composant de restitution de formulaire reçoit les informations dynamiques sous forme de représentation de serveur du formulaire et identifie les différences à appliquer à la représentation restituable.

10. Système informatique selon la revendication 8, dans lequel le composant de restitution de formulaire reçoit les informations dynamiques du serveur avec les différences identifiées par le serveur.

11. Système informatique selon la revendication 8, dans lequel le composant de restitution de formulaire génère la représentation restituable du formulaire, à partir de la représentation statique, sous forme d'une représentation fonctionnelle du formulaire, sans les informations dynamiques.

12. Système informatique selon la revendication 11, dans lequel le composant de restitution de formulaire comprend un navigateur sur le dispositif client.

13. Système informatique selon la revendication 11, et comprenant, en outre :
un composant d'application client configuré pour recevoir une entrée utilisateur demandant l'affichage d'un formulaire et envoyer une demande au serveur pour obtenir la représentation statique du formulaire et pour envoyer une demande au serveur pour obtenir les informations dynamiques.

14. Procédé consistant à :
détecter des entrées de création de formulaire, dans un système de développement, qui indiquent des métadonnées définissant un formulaire ;
générer une représentation statique du formulaire sur la base des métadonnées, la représentation statique du formulaire incluant des informations structurelles qui indiquent une structure de commande sur le formulaire et des informations d'attribut qui indiquent des propriétés du formulaire ; et
générer, séparément de la représentation statique, une représentation de serveur du formulaire sur la base des métadonnées, la représentation de serveur indiquant des informations dynamiques pour le formulaire,
**caractérisé en ce que**
la représentation statique est créée parallèlement au renvoi des informations dynamiques en tant que résultats de l'exécution d'une logique.

15. Procédé selon la revendication 14, et comprenant, en outre :
la réception d'une entrée utilisateur de compilation et la génération de la représentation statique et de la représentation de serveur en réponse à l'entrée utilisateur de compilation.
